(19) Europäisches Patentamt
European Patent Office
Office européen des brevets

(11) EP 3 627 599 A1

(12) EUROPEAN PATENT APPLICATION
published in accordance with Art. 153(4) EPC

(43) Date of publication:
**25.03.2020 Bulletin 2020/13**

(21) Application number: **18802907.8**

(22) Date of filing: **23.04.2018**

(51) Int Cl.:
***H01M 4/70*** *(2006.01)* ***H01G 11/68*** *(2013.01)*
***H01G 11/70*** *(2013.01)* ***H01M 4/13*** *(2010.01)*
***H01M 4/134*** *(2010.01)* ***H01M 4/66*** *(2006.01)*
***H01G 11/06*** *(2013.01)*

(86) International application number:
**PCT/JP2018/016425**

(87) International publication number:
**WO 2018/211916 (22.11.2018 Gazette 2018/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2017 JP 2017099007**
**25.12.2017 JP 2017247553**

(71) Applicant: **FUJIFILM Corporation**
**Tokyo 106-8620 (JP)**

(72) Inventors:
- **SAWADA Hirokazu**
**Haibara-gun**
**Shizuoka 421-0396 (JP)**
- **KAWAGUCHI Junji**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(54) **PERFORATED METAL FOIL, PERFORATED METAL FOIL MANUFACTURING METHOD, SECONDARY BATTERY NEGATIVE ELECTRODE, AND SECONDARY BATTERY POSITIVE ELECTRODE**

(57) An object of the present invention is to provide a perforated metal foil which enables performing pre-doping with high efficiency and has high strength, a negative electrode for a secondary battery, and a positive electrode for a secondary battery. A perforated metal foil has a plurality of through-holes in a thickness direction of a metal foil, in which an average opening ratio by the through-holes is 0.5% to 10%, a number density of the through-holes is 50 to 200 holes/$mm^2$, and the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a foil formed by laminating a foil selected from this group and a metal of a different type from the selected foil.

FIG. 1

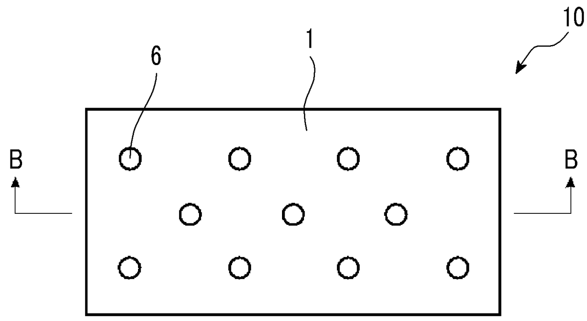


EP 3 627 599 A1

## Description

## BACKGROUND OF THE INVENTION

1. Field of the Invention

The present invention relates to a perforated metal foil, a method for manufacturing the perforated metal foil, a negative electrode for a secondary battery, and a positive electrode for a secondary battery.

2. Description of the Related Art

In recent years, with the development of portable devices such as personal computers and mobile phones, hybrid vehicles, electric vehicles, and the like, electric storage devices as a power source thereof, particularly, lithium ion capacitors, lithium ion secondary batteries, and electric double layered capacitors are known, and, particularly, the demand for lithium ion secondary batteries has increased.

In a collector for an electrode (hereinafter, simply referred to as a "collector") which is used for a positive electrode or a negative electrode of the electric storage device, a metal foil such as an aluminum foil or a copper foil is used. Particularly, a method called Li pre-doping is known as a technique for increasing energy density by excessively adding lithium in advance to the electric storage device. This technology is necessary for lithium ion capacitors or next-generation lithium ion secondary batteries. It has been known that in order to perform Li pre-doping, a metal foil of a collector for an electrode, in which a large number of fine through-holes are formed, is used. In addition, it has been known that an active material such as activated carbon is applied to a surface of a collector formed of the metal foil in which through-holes are formed, and the resulting material is used as an electrode such as a positive electrode or a negative electrode.

For example, JP2013-077734A discloses an electrode including a metal foil having a plurality of through-holes and an active material layer coating one side or both sides of the metal foil ([claim 1]).

JP2013-077734A also discloses that an area ratio (average opening ratio) of through-holes is 1% or more and 50% or less, and a minimum hole diameter of the through-holes is 0.01 mm or more and 0.19 mm or less ([claim 2] and [claim 3]).

## SUMMARY OF THE INVENTION

Incidentally, a lithium ion secondary battery having higher energy density has been studied, and using silicon (Si), tin (Sn), oxides thereof, or the like as the negative electrode material has been studied.

Volume of these materials is largely expanded and contracted during charging and discharging of a secondary battery. Therefore, a conventional collector for a negative electrode has insufficient strength, and thus there is a problem in that the collector is damaged due to expansion and contraction of volume during charging and discharging. On the other hand, a collector having high strength is beginning to be studied.

Likewise, using sulfur or a compound containing sulfur as a positive electrode material has been studied. Volume of these materials is also expanded and contracted because sulfur forms a compound together with lithium in an electrolytic solution during charging and discharging of a secondary battery. Therefore, a conventional collector for a positive electrode has insufficient strength, and thus there is a problem in that the collector is damaged due to expansion and contraction of volume during charging and discharging. On the other hand, a collector having high strength is beginning to be studied.

Meanwhile, a next-generation lithium ion secondary battery having high energy density requires Li pre-doping to cause Li ions in the secondary battery to be in excess. A collector requires through-holes in order to efficiently perform the pre-doping. However, in a case where through-holes are formed, the strength drastically decreases.

An object of the present invention is to provide a perforated metal foil which enables performing pre-doping with high efficiency and has high strength, a method for manufacturing a perforated metal foil, a negative electrode for a secondary battery, and a positive electrode for a secondary battery.

As a result of an intensive study to achieve the object, the inventors have found that the object is achieved by using a perforated metal foil that has a plurality of through-holes in a thickness direction of a metal foil, in which an average opening ratio by the through-holes is 0.5% to 10%, a number density of the through-holes is 50 to 200 holes/$mm^2$, and the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a foil formed by laminating a foil selected from this group and a metal of a different type from the selected foil, and completed

the present invention.

That is, the inventors have found that the object can be achieved with the following configuration.

[1] A perforated metal foil, which has a plurality of through-holes in a thickness direction of a metal foil, in which an average opening ratio by the through-holes is 0.5% to 10%, a number density of the through-holes is 50 to 200 holes/$mm^2$, and the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a foil formed by laminating a foil selected from this group and a metal of a different type from the selected foil.

[2] The perforated metal foil according to [1], in which the metal foil is a stainless steel foil or a nickel-plated steel foil.

[3] The perforated metal foil according to [1] or [2], in which breaking strength of the metal foil in a state where the through-holes are not formed is 340 N/$mm^2$ or more.

[4] The perforated metal foil according to any one of [1] to [3], in which the average opening ratio by the through-holes is 1% to 10%.

[5] The perforated metal foil according to any one of [1] to [4], in which the number density of the through-holes is 80 to 200 holes/$mm^2$.

[6] The perforated metal foil according to [1] or [2], in which the metal foil is a copper foil.

[7] The perforated metal foil according to [6], in which an amount of halogen detected in the copper foil by an XRF analysis is 0.4 mass% or less.

[8] A negative electrode for a secondary battery, comprising: a negative electrode collector formed of the perforated metal foil according to any one of [1] to [7]; and an active material layer including a negative electrode active material, which is formed on a surface of the negative electrode collector, in which the negative electrode active material is at least one of silicon, tin, or oxides thereof.

[9] A positive electrode for a secondary battery, comprising: a positive electrode collector formed of the perforated metal foil according to any one of [1] to [7]; and an active material layer including a positive electrode active material, which is formed on a surface of the positive electrode collector, in which the positive electrode active material is at least one of sulfur or a compound containing sulfur.

[10] A method for manufacturing the perforated metal foil according to any one of [1] to [7], comprising: a through-hole forming step of forming through-holes in the metal foil, in which through-holes having an average opening ratio of 0.5% to 10% and a number density of 50 to 200 holes/$mm^2$ are formed by the through-hole forming step.

[11] The method for manufacturing the perforated metal foil according to [10], in which the metal foil is a copper foil, and the method further comprises a residue removing step of performing washing with at least one selected from the group consisting of hydrochloric acid, aqueous ammonia, sodium thiosulfate, and ethanol after the through-holes are formed.

According to the present invention, it is possible to provide a perforated metal foil which enables performing pre-doping with high efficiency and has high strength, a method for manufacturing a perforated metal foil, a negative electrode for a secondary battery, and a positive electrode for a secondary battery as will be described below.

## BRIEF DESCRIPTION OF THE DRAWINGS

Fig. 1 is a plan view schematically showing an example of a perforated metal foil of the present invention.

Fig. 2 is a cross-sectional view taken along a line B-B of Fig.1.

Fig. 3 is a schematic cross-sectional view for explaining an example of a method for manufacturing a perforated metal foil of the present invention.

Fig. 4 is a schematic cross-sectional view for explaining the example of the method for manufacturing a perforated metal foil of the present invention.

Fig. 5 is a schematic cross-sectional view for explaining the example of the method for manufacturing a perforated metal foil of the present invention.

Fig. 6 is a schematic cross-sectional view for explaining the example of the method for manufacturing a perforated metal foil of the present invention.

## DESCRIPTION OF THE PREFERRED EMBODIMENTS

Hereinafter, the present invention will be described in detail.

The following descriptions of constitutional requirements are given based on representative embodiments of the present invention, but the present invention is not limited to the embodiments.

In the present specification, a numerical value range expressed using the expression "to" means a range including numerical values before and after "to" as a lower limit value and an upper limit value.

A perforated metal foil according to the embodiment of the present invention is a perforated metal foil having a plurality of through-holes in a thickness direction of a metal foil, in which an average opening ratio by the through-holes is 0.5% to 10%, a number density of the through-holes is 50 to 200 holes/$mm^2$, and the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a foil formed by laminating a foil selected from this group and a metal of a different type from the selected foil.

Fig. 1 is a plan view schematically showing a perforated metal foil according to the embodiment of the present invention, and Fig. 2 is a cross-sectional view taken along a line B-B of Fig. 1.

A perforated metal foil 10 shown in Figs. 1 and 2 has a plurality of through-holes 6 in a thickness direction of a metal foil 1.

In the present invention, a foil selected from the group, or a foil formed by laminating a foil selected from the group and a metal of a different type from the selected foil is used as the metal foil. An average opening ratio by the through-holes formed in the metal foil is set to 0.5% to 10%, and a number density of the through-holes is set to 50 to 200 holes/$mm^2$. As a result, in case of using the perforated metal foil as a collector, pre-doping can be performed with high efficiency and the perforated metal foil has high strength. Therefore, even in a case where a material of which volume is largely expanded and contracted during charging and discharging is used as a negative electrode material or a positive electrode material of a secondary battery, damage due to expansion and contraction of volume during charging and discharging can be prevented.

From the viewpoint of pre-doping characteristics, it is preferable that the average opening ratio by the through-holes is high. In addition, in a case where a distance between adjacent through-holes is long, lithium ions are difficult to reach in a region between the through-holes, and thus the time until completion of pre-doping becomes long, and pre-doping cannot be performed with high efficiency. That is, since the distance between the through-holes becomes shorter as a number density of the through-holes is higher, it is possible to improve the pre-doping characteristics by enhancing diffusibility of lithium ions. However, considering a case where the average opening ratio is constant, in a case where the number density of the through-holes is too high, an opening diameter of each through-hole becomes too small and the negative electrode material hardly penetrates into the through-holes. Therefore, the pre-doping characteristics may deteriorate. Accordingly, it is preferable that the number density of the through-holes is in an appropriate range.

From the viewpoint of strength, it is preferable that the average opening ratio by the through-holes is low. In addition, in a case where the average opening ratio is constant, a large number of small through-holes are preferable to a small number of large through-holes. However, in a case where the number of through-holes is excessively large, the through-holes may be connected with each other to reduce the strength. Therefore, there is an appropriate range.

As described above, from the viewpoint of the pre-doping characteristics and the strength, in the perforated metal foil according to the embodiment of the present invention, the average opening ratio of the through-holes is set to 0.5% to 10%, and the number density of the through-holes is set to 50 to 200 holes/$mm^2$.

From the viewpoint of further improving the pre-doping characteristics and the strength, the average opening ratio of the through-holes is preferably 1% to 10%, and more preferably 2% to 8%.

In addition, from the viewpoint of further improving the pre-doping characteristics and the strength, the number density of the through-holes is preferably 80 to 200 holes/$mm^2$, and more preferably 100 to 150 holes/$mm^2$.

Here, regarding the average opening ratio by the through-holes, a parallel light optical unit is installed on one surface side of the perforated metal foil, parallel light is transmitted, and the surface of the perforated metal foil is imaged using an optical microscope at a magnification of 100 times from the other surface of the perforated metal foil to acquire a photograph, in visual fields of 1 mm×1 mm (at five places) in a 10 cm×10 cm range in the obtained photograph, a proportion (opening area/geometric area) is calculated from the total opening area of the through-holes projected with the transmitted parallel light and the area of the visual field (geometric area), and the average value of the proportions in the visual fields (at five places) is calculated as the average opening ratio.

The number density of the through-holes is measured by the following method.

First, a parallel light optical unit is installed on one surface side of the perforated metal foil, parallel light is transmitted, and the surface of the perforated metal foil is imaged using an optical microscope at a magnification of 100 times from the other surface of the perforated metal foil to acquire a photograph. In visual fields of 1 mm×1 mm (at five

places) in a 10 cm×10 cm range in the obtained photograph, a number density (number of through-holes/geometric area) is calculated from the number of the through-holes projected with the transmitted parallel light and the area of the visual field (geometric area), and the average value of the number densities in the visual fields (at five places) is calculated as the number density.

Here, in a case where the average opening diameter of the through-holes is too small, the negative electrode material hardly penetrates into the through-holes, and thus the pre-doping characteristics may deteriorate. On the other hand, in a case where the average opening diameter of the through-holes is too large, the strength of the perforated metal foil decreases. Accordingly, from the viewpoint of satisfying the average opening ratio and the number density described above and from the viewpoint of further improving the pre-doping characteristics and the strength, the average opening diameter of the through-holes is preferably 0.1 μm or greater and 50 μm or less, and more preferably 0.5 μm or greater and 30 μm or less, and still more preferably, 1 μm or greater and 20 μm or less.

Here, regarding the average opening diameter of the through-holes, the surface of the perforated metal foil is imaged from directly above using a high resolution scanning electron microscope (scanning electron microscope (SEM)) at a magnification of 100 to 10,000 times. In the obtained SEM photograph, at least 20 through-holes having an annular periphery are extracted, and their diameters are read to obtain the opening diameters. The average value of the opening diameters is calculated as the average opening diameter.

As the magnification, a magnification within the above-described range can be appropriately selected so as to obtain a SEM photograph in which at least 20 through-holes can be extracted. In addition, the maximum distance between the end portions of the through-hole is measured as the opening diameter. That is, since the shape of the opening of the through-hole is not limited to a substantially circular shape, the maximum distance between the end portions of the through-hole is defined as the opening diameter in a case where the shape of the opening is non-circular. Therefore, for example, even in a case of a through-hole having such a shape that two or more through-holes are integrated, the through-hole is regarded as one through-hole, and the maximum distance between the end portions of the through-hole is defined as the opening diameter.

From the viewpoint of strength and from the viewpoint of forming through-holes satisfying the number density and the average opening ratio described above, in the perforated metal foil according to the embodiment of the present invention, the following metal foil is used.

Specific examples of the metal foil include a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil.

The metal foil may be a laminate of two or more different metals including the above types of metals.

A metal foil lamination method is not particularly limited, and plating or a clad material is preferably used. A metal used for plating is not particularly limited, but in a case where through-holes are formed by a manufacturing method described later, any metal may be used as long as the metal contains a metal atom which dissolves in an etchant used for forming through-holes. Examples of the plating species include nickel, chromium, cobalt, iron, zinc, tin, copper, silver, gold, platinum, palladium, and aluminum.

The plating method is not particularly limited, and any of electroless plating, electrolytic plating, hot dip plating, a chemical conversion treatment, or the like is used.

Moreover, the metal which is used to form a clad material for the metal foil is also not particularly limited, and is preferably a metal containing a metal atom which dissolves in an etchant. Examples of the metal species include the metals which are used for the metal foil.

From the viewpoint of strength and easiness of formation of through-holes, it is preferable to use a stainless steel foil or a nickel-plated steel foil as the metal foil.

In addition, in a case where a copper foil is used as the metal foil, an amount of halogen detected in the copper foil by an X-ray fluorescence (XRF) analysis is preferably 0.4 mass% or less. The XRF analysis can be performed with, for example, ZSX Primus II manufactured by Rigaku Corporation, and the amount of halogen detected can be measured.

In a through-hole formation treatment of a metal foil described later, depending on the combination of an etchant and a metal foil, reaction residues may generate. The presence of reaction residues may cause corrosion over time. An amount of reaction residues can be determined by the amount of halogen detected by the XRF analysis, and the amount of halogen detected is preferably 0.4 mass% or less since the possibility of corrosion over time can be reduced.

Breaking strength of the metal foil in a state where the through-holes are not formed is preferably 340 $N/mm^2$ or more, more preferably 600 $N/mm^2$ or more, and still more preferably 800 $N/mm^2$.

By setting the breaking strength of the metal foil in a state where the through-holes are not formed to 340 $N/mm^2$ or more, the breaking strength of the perforated metal foil in a state where the through-holes are formed can also be increased.

The measurement of the breaking strength of the metal foil is performed based on a method of tensile test for

metallic materials of JIS Z2241. As a tensile tester, AUTOGRAPH AGS-X 5kN manufactured by Shimadzu Corporation is used. As a sample, a No. 5 test piece is used, measurement is performed at N = 3, and an average value is measured as the breaking strength.

A thickness of the metal foil is preferably 6 μm to 100 μm, and more preferably 10 μm to 40 μm.

Here, the average thickness of the metal foil refers to the average value of the thicknesses measured at any five points using a contact-type film thickness meter (digital electronic micrometer).

Next, an example of a method for manufacturing the perforated metal foil according to the embodiment of the present invention (hereinafter referred to as a "method 1 for manufacturing a perforated metal foil") will be described.

The method 1 for manufacturing a perforated metal foil includes a resin layer forming step of forming, using a composition containing a plurality of metal particles and a polymer component, a resin layer in which the metal particles are partially embedded on one principal surface of a metal foil.

The method 1 for manufacturing a perforated metal foil further includes a through-hole forming step of forming through-holes in the metal foil by dissolving the metal particles and a part of the metal foil by bringing the metal foil having the resin layer into contact with an etchant after the resin layer forming step.

The method 1 for manufacturing a perforated metal foil further includes a resin layer removing step of removing the resin layer to produce a perforated metal foil having through-holes after the through-hole forming step.

The method 1 for manufacturing a perforated metal foil preferably further includes a protective layer forming step of forming, using a composition containing a polymer component, a protective layer on a principal surface of the metal foil opposite to the surface on which the resin layer is formed before the through-hole forming step.

By the through-hole forming step, through-holes having an average opening ratio of 0.5% to 10% and a number density of 50 to 200 holes/mm$^2$ are formed in a metal foil.

In the method 1 for manufacturing a perforated metal foil, the through-hole forming step of forming through-holes by dissolving the metal particles and a part of the metal foil is performed after the resin layer forming step, and then the resin layer is removed. Accordingly, it is possible to easily produce a metal foil having a plurality of fine through-holes.

That is, it is thought that by providing the resin layer forming step and the through-hole forming step, the metal foil is dissolved together with the metal particles in a thickness direction at positions corresponding to the portions where the metal particles are embedded, and through-holes are formed as shown in Figs. 3 to 5 to be described later, whereby it is possible to easily produce a metal foil having a plurality of fine through-holes.

Next, the steps in the method 1 for manufacturing a perforated metal foil will be briefly described using Figs. 3 to 6, and then the respective treatment steps of the method 1 for manufacturing a perforated metal foil will be described in detail later.

In the method 1 for manufacturing a perforated metal foil, by a resin layer forming step using a composition containing a plurality of metal particles and a polymer component, a resin layer 3 in which a plurality of metal particles 2 are partially embedded is formed on one principal surface of a metal foil 1 as shown in Fig. 3.

In the method 1 for manufacturing a perforated metal foil, a protective layer 4 is preferably formed on a principal surface of the metal foil 1 opposite to the surface on which the resin layer 3 is formed as shown in Fig. 4 by an optional protective layer forming step using a composition containing a polymer component.

In the method 1 for manufacturing a perforated metal foil, through-holes 5 are formed in the resin layer 3 and the metal foil 1 as shown in Fig. 5 by a through-hole forming step of dissolving the metal particles and a part of the metal foil by bringing the metal foil having the resin layer into contact with an etchant.

In the method 1 for manufacturing a perforated metal foil, a perforated metal foil 10 having a plurality of through-holes 6 is formed as shown in Fig. 6 by a resin layer removing step of removing the resin layer. In a case where the protective layer forming step is provided, the resin layer and the protective layer are removed by the resin layer removing step as shown in Fig. 6, and thus the perforated metal foil 10 having a plurality of through-holes 6 is formed.

[Resin Layer Forming Step]

In the resin layer forming step of the method 1 for manufacturing a perforated metal foil, using a composition containing a plurality of metal particles and a polymer component, a resin layer in which the metal particles are at least partially embedded is formed on one principal surface of a metal foil.

[Composition]

The composition which is used in the resin layer forming step contains at least a plurality of metal particles and a polymer component.

<Metal Particles>

The metal particles contained in the composition are not particularly limited as long as these are particles containing a metal atom which dissolves in an etchant used in the through-hole forming step to be described later. The metal particles are preferably particles made of a metal and/or a metal compound, and more preferably particles made of a metal.

Specific examples of the metal constituting the metal particles include aluminum, nickel, iron, copper, stainless steel, titanium, tantalum, molybdenum, niobium, zirconium, tungsten, beryllium, and alloys thereof. These may be used alone or in combination of two or more types thereof.

Among these, aluminum, nickel, and copper are preferable, and aluminum and copper are more preferable.

Examples of the metal compound constituting the metal particles include oxides, complex oxides, hydroxides, carbonates, sulfates, silicates, phosphates, nitrides, carbides, sulfides, and composite materials of at least two or more types thereof. Specific examples thereof include copper oxide, aluminum oxide, aluminum nitride, and aluminum borate.

It is preferable that the metal particles and the above-described metal foil contain the same metal atom from the viewpoint of recovering the etchant which is used in the through-hole removing step to be described later and recycling the dissolved metal.

The shape of the metal particles is not particularly limited. The shape is preferably a spherical shape, and more preferably closer to a true spherical shape.

The average particle diameter of the metal particles is preferably 1 to 10 μm, and more preferably greater than 2 μm and 6 μm or less from the viewpoint of dispersibility in the composition.

Here, the average particle diameter of the metal particles refers to the cumulative 50% diameter of the particle size distribution measured by a laser diffraction/scattering type particle diameter measuring device (MICROTRAC MT3000 manufactured by Nikkiso Co., Ltd.).

The content of the metal particles is preferably 0.05 to 95 mass%, more preferably 1 to 50 mass%, and even more preferably 3 to 25 mass% with respect to the total solid content contained in the composition.

<Polymer Component>

The polymer component contained in the composition is not particularly limited, and a conventionally known polymer component can be used.

Specific examples of the polymer component include epoxy-based resins, silicone-based resins, acrylic resins, urethane-based resins, ester-based resins, urethane acrylate-based resins, silicone acrylate-based resins, epoxy acrylate-based resins, ester acrylate-based resins, polyamide-based resins, polyimide-based resins, polycarbonate-based resins, and phenolic resins. These may be used alone or in combination of two or more types thereof.

Among these, the polymer component is preferably a resin material selected from the group consisting of phenolic resins, acrylic resins, and polyimide-based resins since the above resins have excellent acid resistance, and thus desired through-holes are easily obtained even in a case where an acidic solution is used as an etchant which is used in the through-hole forming step to be described later.

In the present invention, from the viewpoint of easiness of removal in the resin layer removing step to be described later, the polymer component contained in the composition is preferably a water-insoluble and alkaline water-soluble polymer (hereinafter, also abbreviated as an "alkaline water-soluble polymer"), that is, a homopolymer containing an acidic group in a main chain or a side chain of the polymer, a copolymer thereof, or a mixture thereof.

As the alkaline water-soluble polymer, those having an acidic group in a main chain and/or a side chain of the polymer are preferable from the viewpoint of further facilitating removal in the resin layer removing step to be described later.

Specific examples of the acidic group include a phenolic group (-Ar-OH), a sulfonamide group ($-SO_2NH-R$), a substituted sulfonamide-based acid group (hereinafter, referred to as an "active imide group") [$-SO_2NHCOR$, $-SO_2NHSO_2R$, $-CONHSO_2R$], a carboxyl group ($-CO_2H$), a sulfo group ($-SO_3H$), and a phosphonic group ($-OPO_3H_2$).

Ar represents a divalent aryl linking group which may have a substituent, and R represents a hydrocarbon group which may have a substituent.

Among the alkaline water-soluble polymers having an acidic group, alkaline water-soluble polymers having a phenolic group, a carboxyl group, a sulfonamide group, or an active imide group are preferable. Particularly, alkaline water-soluble polymers having a phenolic group or a carboxyl group are most preferable from the viewpoint of the balance between the hardness of the resin layer to be formed and the removability in the resin layer removing step to be described later.

Examples of the alkaline water-soluble polymer having an acidic group are as follows.

Examples of the alkaline water-soluble polymer having a phenolic group include novolak resins manufactured from one or more types of phenols such as phenol, o-cresol, m-cresol, p-cresol, and xylenol and aldehydes such as

formaldehyde and paraformaldehyde, and polycondensates of pyrogallol and acetone. Copolymers obtained by copolymerization of a compound having a phenolic group can also be included. Examples of the compound having a phenolic group include acrylamide, methacrylamide, acrylic acid ester, methacrylic acid ester, and hydroxystyrene, which have a phenolic group.

Specific examples thereof include N-(2-hydroxyphenyl)acrylamide, N-(3-hydroxyphenyl)acrylamide, N-(4-hydroxyphenyl)acrylamide, N-(2-hydroxyphenyl)methacrylamide, N-(3-hydroxyphenyl)methacrylamide, N-(4-hydroxyphenyl)methacrylamide, o-hydroxyphenyl acrylate, m-hydroxyphenyl acrylate, p-hydroxyphenyl acrylate, o-hydroxyphenyl methacrylate, m-hydroxyphenyl methacrylate, p-hydroxyphenyl methacrylate, o-hydroxystyrene, m-hydroxystyrene, p-hydroxystyrene, 2-(2-hydroxyphenyl)ethyl acrylate, 2-(3-hydroxyphenyl)ethyl acrylate, 2-(4-hydroxyphenyl)ethyl acrylate, 2-(2-hydroxyphenyl)ethyl methacrylate, 2-(3-hydroxyphenyl)ethyl methacrylate, and 2-(4-hydroxyphenyl)ethyl methacrylate.

Among these, novolak resins or copolymers of hydroxystyrene are preferable. Examples of commercially available products of the copolymers of hydroxystyrene include MARUKA LYNCUR M H-2, MARUKA LYNCUR M S-4, MARUKA LYNCUR M S-2, and MARUKA LYNCUR M S-1, all manufactured by MARUZEN PETROCHEMICAL CO., LTD., and VP-8000 and VP-15000, all manufactured by NIPPON SODA CO., LTD.

Examples of the alkaline water-soluble polymer having a sulfonamide group include polymers including, as a main constitutional component, a minimum constitutional unit derived from a compound having a sulfonamide group. Examples of the compound include compounds having at least one sulfonamide group in which at least one hydrogen atom is bonded to a nitrogen atom and at least one polymerizable unsaturated group in the molecule. Among these, low-molecular-weight compounds having an acryloyl group, an allyl group, or a vinyloxy group and a substituted or mono-substituted aminosulfonyl group or substituted sulfonylimino group in the molecule are preferable.

Particularly, m-aminosulfonyl phenyl methacrylate, N-(p-aminosulfonylphenyl)methacrylamide, N-(p-aminosulfonylphenyl)acrylamide, or the like can be preferably used.

Examples of the alkaline water-soluble polymer having an active imide group include polymers including, as a main constitutional component, a minimum constitutional unit derived from a compound having an active imide group. Examples of the compound include compounds having at least one active imide group represented by the following structural formula and at least one polymerizable unsaturated group in the molecule.

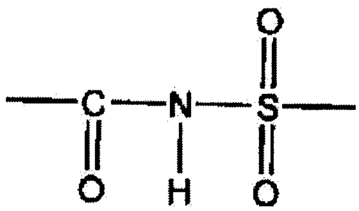

Specifically, N-(p-toluenesulfonyl)methacrylamide, N-(p-toluenesulfonyl)acrylamide, or the like can be preferably used.

Examples of the alkaline water-soluble polymer having a carboxyl group include polymers including, as a main constitutional component, a minimum constitutional unit derived from a compound having at least one carboxyl group and at least one polymerizable unsaturated group in the molecule. Specific examples thereof include polymers using an unsaturated carboxylic acid compound such as acrylic acid, methacrylic acid, maleic acid anhydride, or itaconic acid.

Examples of the alkaline water-soluble polymer having a sulfo group include polymers including, as a main constitutional component, a minimum constitutional unit derived from a compound having at least one sulfo group and at least one polymerizable unsaturated group in the molecule.

Examples of the alkaline water-soluble polymer having a phosphonic group include polymers including, as a main constitutional component, a minimum constitutional unit derived from a compound having at least one phosphonic group and at least one polymerizable unsaturated group in the molecule.

Particularly, it is not necessary for the minimum constitutional unit having an acidic group, which constitutes the alkaline water-soluble polymer, to be only one type. Two or more types of minimum constitutional units having the same acidic group, or those obtained by copolymerizing two or more types of minimum constitutional units having different acidic groups can be used.

As a copolymerization method, a graft copolymerization method, a block copolymerization method, or a random copolymerization method, which has been known, can be used.

In the copolymer, a compound having an acidic group to be copolymerized is preferably contained in an amount of 10 mol% or greater, and more preferably contained in an amount of 20 mol% or greater.

In the present invention, in a case where a copolymer is formed by copolymerization of a compound, other compounds containing no acidic group can also be used as the compound. Examples of the other compounds containing

no acidic group include compounds of the following (m1) to (m11).

(m1) Acrylic acid esters and methacrylic acid esters having an aliphatic hydroxyl group such as 2-hydroxyethyl acrylate or 2-hydroxyethyl methacrylate
(m2) Alkyl acrylates such as methyl acrylate, ethyl acrylate, propyl acrylate, butyl acrylate, amyl acrylate, hexyl acrylate, octyl acrylate, benzyl acrylate, 2-chloroethyl acrylate, glycidyl acrylate, and N-dimethylaminoethyl acrylate
(m3) Alkyl methacrylates such as methyl methacrylate, ethyl methacrylate, propyl methacrylate, butyl methacrylate, amyl methacrylate, hexyl methacrylate, cyclohexyl methacrylate, benzyl methacrylate, 2-chloroethyl methacrylate, glycidyl methacrylate, and N-dimethylaminoethyl methacrylate
(m4) Acrylamides or methacrylamides such as acrylamide, methacrylamide, N-methylolacrylamide, N-ethylacrylamide, N-hexylmethacrylamide, N-cyclohexylacrylamide, N-hydroxyethylacrylamide, N-phenylacrylamide, N-nitrophenylacrylamide, and N-ethyl-N-phenylacrylamide
(m5) Vinyl ethers such as ethyl vinyl ether, 2-chloroethyl vinyl ether, hydroxyethyl vinyl ether, propyl vinyl ether, butyl vinyl ether, octyl vinyl ether, and phenyl vinyl ether
(m6) Vinyl esters such as vinyl acetate, vinyl chloroacetate, vinyl butyrate, and vinyl benzoate
(m7) Styrenes such as styrene, $\alpha$-methylstyrene, methylstyrene, and chloromethylstyrene
(m8) Vinyl ketones such as methyl vinyl ketone, ethyl vinyl ketone, propyl vinyl ketone, and phenyl vinyl ketone
(m9) Olefins such as ethylene, propylene, isobutylene, butadiene, and isoprene
(m10) N-vinyl pyrrolidone, N-vinyl carbazole, 4-vinyl pyridine, acrylonitrile, and methacrylonitrile
(m11) Unsaturated imides such as maleimide, N-acryloylacrylamide, N-acetylmethacrylamide, N-propionylmethacrylamide, and N-(p-chlorobenzoyl)methacrylamide

The polymer component preferably has a weight-average molecular weight of $1.0\times10^3$ to $2.0\times10^5$ and a number-average molecular weight of $5.0\times10^2$ to $1.0\times10^5$, regardless of the fact that the polymer component is either a homopolymer or a copolymer. In addition, the polymer component preferably has a polydispersity (weight-average molecular weight/number-average molecular weight) of 1.1 to 10.
In a case where a copolymer is used as the polymer component, the mixing ratio by weight of a minimum constitutional unit constituting a main chain and/or a side chain of the copolymer and derived from a compound having an acidic group to another minimum constitutional unit constituting a part of the main chain and/or a side chain and containing no acidic group is preferably within a range of 50:50 to 5:95, and more preferably within a range of 40:60 to 10:90.
Regarding the above-described polymer component, only one type may be used, or two or more types may be used in combination. The polymer component is preferably used within a range of 30 to 99 mass%, more preferably used within a range of 40 to 95 mass%, and particularly preferably used within a range of 50 to 90 mass% with respect to the total solid content contained in the composition.
In the present invention, regarding the metal particles and the polymer component described above, the specific gravity of the metal particles is preferably greater than the specific gravity of the polymer component since forming through-holes becomes easier in the through-hole forming step to be described later. Specifically, it is more preferable that the specific gravity of the metal particles is 1.5 or greater, and the specific gravity of the polymer component is 0.9 or greater and less than 1.5.

<Surfactant>

From the viewpoint of coatability, a nonionic surfactant described in JP1987-251740A (JP-S62-251740A) or JP1991-208514A (JP-H3-208514A), or an amphoteric surfactant described in JP1984-121044A (JP-S59-121044A) or JP1992-013149A (JP-H4-013149A) can be added to the composition.
Specific examples of the nonionic surfactant include sorbitan tristearate, sorbitan monopalmitate, sorbitan trioleate, stearic acid monoglyceride, and polyoxyethylene nonyl phenyl ether.
Specific examples of the amphoteric surfactant include alkyl di(aminoethyl)glycine, alkylpolyaminoethylglycine hydrochloride, 2-alkyl-N-carboxyethyl-N-hydroxyethyl imidazolinium betaine, and an N-tetradecyl-N,N-betaine type (for example, trade name: AMOGEN K, manufactured by DAIICHI KOGYO Co., Ltd.).
In a case where the surfactant is contained, the content thereof is preferably 0.01 to 10 mass%, and more preferably 0.05 to 5 mass% with respect to the total solid content contained in the composition.

<Solvent>

A solvent can be added to the composition from the viewpoint of workability in forming the resin layer.
Specific examples of the solvent include ethylene dichloride, cyclohexanone, methyl ethyl ketone, methanol,

ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, γ-butyrolactone, toluene, and water. These may be used alone or in combination of two or more types thereof.

<Forming Method>

The method for forming a resin layer using the above-described composition is not particularly limited, and a method for forming a resin layer by applying the composition to a metal foil is preferable.
The method for application to a metal foil is not particularly limited, and a method such as a bar coating method, a slit coating method, an ink jet method, a spray method, a roll coating method, a spin coating method, a cast coating method, a slit and spin method, or a transfer method can be used.
In the present invention, the resin layer is preferably formed so as to satisfy Formula (1) since forming through-holes becomes easier in the through-hole forming step to be described later.

$$n<r \cdots (1)$$

Here, in Formula (1), n represents a thickness of the resin layer to be formed, r represents an average particle diameter of the particles which are contained in the composition, and each of units of n and r is μm.
In the present invention, from the viewpoints of resistance to an etchant which is used in the through-hole forming step to be described later and workability in the resin layer removing step to be described later, the thickness of the resin layer to be formed through the resin layer forming step is preferably 0.5 to 4 μm, and more preferably 1 μm or greater and 2 μm or less.
Here, an average thickness of the resin layer refers to an average value of the thicknesses measured at any five points in a case where the resin layer is cut using a microtome and a cross section thereof is observed by an electron microscope.

[Protective Layer Forming Step]

In the method 1 for manufacturing a perforated metal foil, a protective layer forming step of forming a protective layer, using a composition containing a polymer component, on a principal surface of the metal foil opposite to the surface on which the resin layer is formed is preferably provided before the through-hole forming step from the viewpoint of workability in the through-hole forming step to be described later.
Here, examples of the polymer component are the same as the examples of the polymer component contained in the composition which is used in the above-described resin layer forming step. That is, the protective layer which is formed in an optional protective layer forming step is the same as the above-described resin layer, except that the above-described metal particles are not embedded. In addition, regarding a method for forming the protective layer, the protective layer can be formed in the same manner as in the case of the above-described resin layer, except that the above-described metal particles are not used.
In a case where the protective layer forming step is provided, the order is not particularly limited as long as the protective layer forming step is provided before the through-hole forming step, and the protective layer forming step may be performed before or after or simultaneously with the above-described resin layer forming step.

[Through-Hole Forming Step]

In the through-hole forming step of the method 1 for manufacturing a perforated metal foil, after the above-described resin layer forming step, the metal foil having the resin layer is brought into contact with an etchant to dissolve the metal particles and a part of the metal foil, and through-holes are formed in the metal foil. This step is a step of forming through-holes in the metal foil by a so-called chemical etching treatment.

[Etchant]

As the etchant, an acidic or alkaline chemical solution or the like can be appropriately used as long as it is an etchant suitable for the metal species of the metal foil and the metal particles.
Examples of the acid include hydrochloric acid, sulfuric acid, nitric acid, hydrofluoric acid, hydrogen peroxide, and acetic acid.

Examples of the alkali include caustic soda and caustic potash.

Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as sodium secondary phosphate, potassium secondary phosphate, sodium tertiary phosphate, and potassium tertiary phosphate.

Inorganic salts such as iron(III) chloride and copper(II) chloride can also be used.

These may be used alone or as a mixture of two or more types thereof.

[Treatment Method]

The treatment for forming the through-holes is performed by bringing the metal foil having the resin layer into contact with the above-described etchant.

The contacting method is not particularly limited, and examples thereof include an immersion method and a spray method.

The immersion treatment time is preferably 15 seconds to 10 minutes, and more preferably 30 seconds to 6 minutes.

The liquid temperature of the etchant during immersion is preferably 25°C to 70°C, and more preferably 30°C to 60°C.

[Resin Layer Removing Step]

In the resin layer removing step of the method 1 for manufacturing a perforated metal foil, the resin layer is removed after the above-described through-hole forming step to produce a perforated metal foil having through-holes.

The method for removing the resin layer is not particularly limited, and in a case where the above-described alkaline water-soluble polymer is used as the polymer component, a method for dissolving and removing the resin layer using an alkaline aqueous solution is preferable.

[Alkaline Aqueous Solution]

Specific examples of the alkaline aqueous solution include inorganic alkalis such as sodium hydroxide, potassium hydroxide, sodium carbonate, sodium silicate, sodium metasilicate, and aqueous ammonia; primary amines such as ethylamine and n-propylamine; secondary amines such as diethylamine and di-n-butylamine; tertiary amines such as triethylamine and methyldiethylamine; alcohol amines such as dimethylethanolamine and triethanolamine; quaternary ammonium salts such as tetramethylammonium hydroxide and tetraethylammonium hydroxide; and cyclic amines such as pyrrole and piperidine. These may be used alone or in combination of two or more types thereof.

An appropriate amount of alcohols or a surfactant can be added to the alkaline aqueous solution and used.

[Treatment Method]

The treatment for removing the resin layer is performed by, for example, bringing the metal foil having the resin layer after the through-hole forming step into contact with the above-described alkaline aqueous solution.

The contacting method is not particularly limited, and examples thereof include an immersion method and a spray method.

The immersion treatment time is preferably 5 seconds to 5 minutes, and more preferably 10 seconds to 2 minutes.

The temperature of the alkaline aqueous solution during immersion is preferably 25°C to 60°C, and more preferably 30°C to 50°C.

The average opening ratio and the number density of the through-holes in the perforated metal foil can be adjusted by, for example, the immersion time in the etchant in the above-described through-hole forming step and the content of the metal particles in the composition which is used in the above-described resin layer forming step.

[Anticorrosion Treatment]

The method 1 for manufacturing a perforated metal foil preferably has an anticorrosion treatment step.

The timing of the anticorrosion treatment is not particularly limited. For example, the anticorrosion treatment may be a treatment to be performed on the metal foil which is used in the resin layer forming step, a treatment for adding triazoles or the like to be described later to the alkaline aqueous solution in the resin layer removing step, or a treatment to be performed after the resin layer removing step.

Examples of the anticorrosion treatment include a treatment for immersing the metal foil in a solution having a pH of 5 to 8.5 in which at least triazoles are dissolved in a solvent to form an organic dielectric film.
Preferred examples of the triazoles include benzotriazole (BTA) and tolyltriazole (TTA).
In addition to triazoles, various organic rust preventive materials, thiazoles, imidazoles, mercaptans, triethanolamine, and the like can also be used.
Water or organic solvents (particularly, alcohols) can be appropriately used as a solvent to be used in the anticorrosion treatment, and the solvent is preferably water mainly including deionized water in consideration of the uniformity of an organic dielectric film to be formed, easiness of thickness control at mass production, simplicity, influence on the environment, and the like.
The concentration of the triazoles to be dissolved can be appropriately determined based on the relationship with the thickness of an organic dielectric film to be formed or the treatment time, and may be about 0.005 to 1 wt% in general.
The temperature of the solution may be room temperature. The solution may be warmed and used as necessary.
The immersion time of the metal foil in the solution can be appropriately determined based on the relationship with the concentration of the triazoles to be dissolved or the thickness of an organic dielectric film to be formed, and may be about 0.5 to 30 seconds in general.
Other specific examples of the anticorrosion treatment include a method for forming an inorganic dielectric film mainly including a hydrous oxide of chromium by immersing the metal foil in an aqueous solution prepared by dissolving at least one selected from the group of chromium trioxide, chromate, and bichromate in water.
Here, for example, potassium chromate or sodium chromate is preferable as the chromate, and potassium bichromate or sodium bichromate is preferable as the bichromate. In general, the dissolution concentration thereof is set to 0.1 to 10 mass%, and the liquid temperature may be about room temperature to 60°C. The pH value of the aqueous solution is not particularly limited from the acidic region to the alkaline region, and is set to 1 to 12 in general.
The immersion time of the metal foil is appropriately selected depending on the thickness of an inorganic dielectric film to be formed and the like.
In the present invention, water washing is preferably performed after completion of each of the treatment steps described above. For water washing, pure water, well water, tap water, or the like can be used. In order to prevent the treatment liquids from being carried to the subsequent steps, a nipping device may be used.

[Treatment in Roll-to-Roll Manner]

In the method 1 for manufacturing a perforated metal foil, the treatments in the steps may be performed using a cut sheet-like metal foil on a so-called sheet-by-sheet basis, or performed in a so-called Roll-to-Roll (hereinafter, also referred to as "R to R") manner in which treatments in steps are performed while a long metal foil is transported in a longitudinal direction according to a predetermined transportation path.
In the present invention, R to R refers to a manufacturing method in which while a metal foil is fed from a roll formed by winding a long metal foil and is transported in a longitudinal direction, treatments such as the resin layer forming step and the through-hole forming step described above are continuously performed in order by treatment devices disposed on the transportation path, and the treated metal foil (that is, perforated metal foil) is wound into a roll shape again.
In the method 1 for manufacturing a perforated metal foil, as described above, through-holes are formed by dissolving the metal particles and a part of the metal foil by the through-hole forming step. Therefore, since it is possible to continuously perform the steps without complicating the steps, each step can be easily performed in a R to R manner.
Productivity can be further improved by performing the method 1 for manufacturing a perforated metal foil in a R to R manner.
Here, the method for manufacturing a perforated metal foil according to the embodiment of the present invention is not limited to the method 1 for manufacturing a perforated metal foil described above.
For example, in the method 1 for manufacturing a perforated metal foil, by performing the through-hole forming step after the resin layer forming step, the metal particles and a part of the metal foil are brought into contact with the etchant so as to be dissolved, and the through-holes are formed in the metal foil. However, instead of this, a particle removing step of removing particles may be performed after the resin layer forming step and before the through-hole forming step, and then the through-hole forming step may be performed. In this case, the particles contained in the resin layer are not limited to metal particles, and inorganic fillers, inorganic-organic composite fillers, and the like can be used.
In this way, through the resin layer forming step and the particle removing step, a resin layer in which recesses are formed in portions where the particles were embedded is obtained, and then through-holes are formed starting from the recesses of the resin layer in the subsequent through-hole forming step. It is thought that the reason why the through-holes are formed starting from the recesses of the resin layer is that in the deepest portion of the recess, a very thin resin layer remains or there is a portion where the metal foil is exposed, and thus the etchant more preferentially enters

from the recesses than other portions, and the through-holes are formed in the metal foil.

Examples of the inorganic filler include metals and metal compounds, and examples of the metal compounds include oxides, complex oxides, hydroxides, carbonates, sulfates, silicates, phosphates, nitrides, carbides, sulfides, and composite materials of at least two or more types thereof.

Specific examples thereof include glass, zinc oxide, silica, alumina, zirconium oxide, tin oxide, potassium titanate, strontium titanate, aluminum borate, magnesium oxide, magnesium borate, aluminum hydroxide, magnesium hydroxide, calcium hydroxide, titanium hydroxide, basic magnesium sulfate, calcium carbonate, magnesium carbonate, calcium sulfate, magnesium sulfate, calcium silicate, magnesium silicate, calcium phosphate, silicon nitride, titanium nitride, aluminum nitride, silicon carbide, titanium carbide, zinc sulfide, and composite materials of at least two or more types thereof.

Among these, glass, silica, alumina, potassium titanate, strontium titanate, aluminum borate, magnesium oxide, calcium carbonate, magnesium carbonate, calcium silicate, magnesium silicate, calcium phosphate, and calcium sulfate are preferable.

Examples of the inorganic-organic composite filler include a composite material obtained by coating the surfaces of particles such as synthetic resin particles or natural polymer particles with the above-described inorganic filler.

Specific examples of the synthetic resin particles include particles of resins such as acrylic resins, polyethylene, polypropylene, polyethylene oxide, polypropylene oxide, polyethylene imine, polystyrene, polyurethane, polyurea, polyester, polyamide, polyimide, carboxymethyl cellulose, gelatin, starch, chitin, and chitosan.

Among these, particles of resins such as acrylic resins, polyethylene, polypropylene, and polystyrene are preferable.

In the particle removing step, the method for removing the particles is not particularly limited. For example, in the resin layer in a state where the particles are partially embedded as shown in Fig. 3, the particles can be removed by applying an external force to portions of the particles not embedded in the resin layer using a sponge, a brush, or the like.

In the present invention, since it is possible to rapidly remove the particles without a change in shape of the resin layer, the method for removing the particles is preferably a method for removing the particles by rubbing the surface of the resin layer in which the particles are at least partially embedded while the surface of the resin layer is immersed in a solvent.

Here, "the surface of the resin layer in which the particles are at least partially embedded" refers to the particles and the surface of the resin layer in a case where the particles are partially embedded in the resin layer as shown in Fig. 3. In a case where the particles are completely embedded in the resin layer, "the surface of the resin layer in which the particles are at least partially embedded" refers to the surface of the resin layer.

The solvent is not particularly limited as long as it is a solvent capable of dissolving the resin layer. For example, a solvent similar to the solvent described as an optional component of the composition which is used in the above-described resin layer forming step can be used.

The method for rubbing the surface of the resin layer is not particularly limited, and examples thereof include a rubbing method using a sponge, a brush (for example, a wire brush or a nylon brush roll), or the like.

In addition, examples of another method for manufacturing a perforated metal foil include a method in which a metal foil is brought into contact with an etchant to cause local dissolution starting from an intermetallic compound (precipitate or crystallized material) in the metal foil, and thus through-holes are formed. In the case of this method, since the presence state of the intermetallic compound varies depending on the material of the metal foil, conditions may be set in advance for each material, and conditions such as a condition of the etchant and the etching time may be adjusted. In this case, a resin layer may not be required.

<Residue Removing Step>

In the present invention, after forming the through-holes, a residue removing step of removing reaction residues may be provided.

As described above, in a through-hole formation treatment, reaction residues may generate depending on the combination of an etchant and a metal foil in a step of dissolving a metal foil. The presence of reaction residues may cause corrosion over time. Therefore, a step of performing washing with a treatment liquid to remove reaction residues may be provided after the through-hole forming step.

For example, in a case where a copper foil is used as the metal foil and an iron(III) chloride aqueous solution is used as the etchant, the reaction residues can be removed by performing the residue removing step of performing washing with at least one selected from the group consisting of hydrochloric acid, aqueous ammonia, sodium thiosulfate, and ethanol, as the treatment liquid. For washing, a method for immersion in a solution or a method for application of a solution by a spray can be used.

After the metal foil is dissolved to form the through-holes, the residue removing step may be performed before or after the resin layer removing step.

[Collector]

The perforated metal foil according to the embodiment of the present invention can be used as a collector for an electric storage device (hereinafter, also referred to as a "collector").

In the collector, the perforated metal foil has a plurality of through-holes in a thickness direction. Accordingly, for example, in a case where the collector is used in a lithium ion capacitor, pre-doping of lithium within a short period of time becomes possible, and it becomes possible to more uniformly disperse lithium. In addition, adhesiveness to active material layers or activated carbon is improved, and it is possible to produce electric storage devices which are excellent in terms of productivity such as cycle characteristics, output characteristics, and coating suitability.

In particular, since the collector using the perforated metal foil according to the embodiment of the present invention has high strength despite having a plurality of through-holes, damage due to expansion and contraction of volume during charging and discharging can be prevented even in a case of using a material of which volume is largely expanded and contracted during charging and discharging, as a negative electrode material and a positive electrode material for a secondary battery.

[Active Material Layer]

The active material layer is not particularly limited, and a known active material layer which is used in a conventional electric storage device can be used.

Specifically, regarding an active material, and a conductive material, a binder, a solvent, and the like which may be contained in the active material layer for a case where the perforated metal foil is used as a collector of a positive electrode (positive electrode for secondary battery), materials described in paragraphs [0077] to [0088] of JP2012-216513A can be appropriately employed, the content of which is incorporated herein by reference.

Among them, in case of using sulfur or a compound containing sulfur as the active material of the positive electrode, expansion and contraction of volume during charging and discharging increase. Therefore, in a case where such an active material is used, the perforated metal foil according to the embodiment of the present invention which can suppress damage due to expansion and contraction of volume during charging and discharging is preferably used as a collector of the positive electrode.

Regarding an active material for a case where the perforated metal foil is used as a collector of a negative electrode (negative electrode for secondary battery), materials described in paragraph [0089] of JP2012-216513A can be appropriately employed, the content of which is incorporated herein by reference.

Among them, in a case where a material containing a metal capable of forming an alloy with lithium, such as Sn and Si, for example, tin oxide, silicon oxide, amorphous tin oxide, tin silicon oxide, or the like is used as the active material of the negative electrode, expansion and contraction of volume during charging and discharging increase. Therefore, in a case where such an active material is used, the perforated metal foil according to the embodiment of the present invention which can suppress damage due to expansion and contraction of volume during charging and discharging is preferably used as a collector of the negative electrode.

[Electric Storage Device]

An electrode in which the perforated metal foil according to the embodiment of the present invention is used as a collector can be used as a positive electrode or a negative electrode of an electric storage device.

Here, regarding a specific configuration and applicable uses of the electric storage device (particularly, secondary battery), materials and uses described in paragraphs [0090] to [0123] of JP2012-216513A can be appropriately employed, the content of which is incorporated herein by reference.

[Positive Electrode]

A positive electrode in which the perforated metal foil according to the embodiment of the present invention is used as a collector is a positive electrode (positive electrode for secondary battery) having a positive electrode collector in which the perforated metal foil is used for the positive electrode and a layer (positive electrode active material layer) containing a positive electrode active material which is formed on a surface of the positive electrode collector.

Here, regarding the positive electrode active material, and a conductive material, a binder, a solvent, and the like which may be contained in the positive electrode active material layer, materials described in paragraphs [0077] to [0088] of JP2012-216513A can be appropriately employed, the content of which is incorporated herein by reference.

[Negative Electrode]

A negative electrode in which the perforated metal foil according to the embodiment of the present invention is used as a collector is a negative electrode (negative electrode for secondary battery) having a negative electrode collector in which the perforated metal foil is used for the negative electrode and a layer containing a negative electrode active material which is formed on a surface of the negative electrode collector.
Here, regarding the negative electrode active material, materials described in paragraph [0089] of JP2012-216513A can be appropriately employed, the content of which is incorporated herein by reference.

[Other Uses]

The perforated metal foil according to the embodiment of the present invention can be used not only as a collector for an electric storage device, but also as a heat resistant filter, a heat resistant fine particle filter, a sound insulating material, an oil recovery filter, an electrostatic filter, an antibacterial filter, a liquid modification filter, a water electrolysis filter, an exhaust gas purification filter, a food filtration filter, a marine biological filtration filter, a dust filter, a deoxyribonucleic acid (DNA) filter, a fine powder classification filter, a solid-liquid separation filter, a deodorization filter, a photocatalyst carrier, a hydrogen generating catalyst carrier, an enzymatic electrode, a carrier of a noble metal absorber, an antibacterial carrier, an adsorbent, an absorbent, an optical filter, a far infrared cut filter, a sound insulating/absorbing material, an electromagnetic wave shield, a gas diffusion layer/separator of a direct type fuel cell, a net for an oxygen supply port of a microorganism storage container, a building material, a material for use in illumination, a material for use in metal-like decoration, and the like.

Examples

Hereinafter, the present invention will be described in more detail based on Examples. Materials, usage amounts, ratios, treatment contents, treatment procedures, and the like in the following Examples can be appropriately changed without departing from the gist of the present invention. Accordingly, the scope of the present invention is not restrictively interpreted by the following Examples.
One of the following foils was used as a metal foil.

- Aluminum foil: 1085 material, thickness of 20 μm, manufactured by UACJ Foil Corporation
- Electrolytic copper foil: electrolytic copper foil SV, thickness of 10 μm, manufactured by FUKUDA metal foil & powder Co., Ltd.
- SUS foil A: NSSCFW2BA, thickness of 10 μm, manufactured by Nippon Steel & Sumikin Materials Co., Ltd.
- SUS foil B: NSSC190BA, thickness of 10 μm, manufactured by Nippon Steel & Sumikin Materials Co., Ltd.
- SUS foil C: NSSC190H, thickness of 10 μm, manufactured by Nippon Steel & Sumikin Materials Co., Ltd.
- Ni-plated steel foil: SUPER NICKEL, thickness of 10 μm, manufactured by Nippon Steel & Sumikin Materials Co., Ltd.

Breaking strength in a state where through-holes of each of the above-mentioned metal foils were not formed was measured based on a method of tensile test for metallic materials of JIS Z2241. As a tensile tester, AUTOGRAPH AGS-X 5kN manufactured by Shimadzu Corporation was used. As a sample, a No. 5 test piece was used, measurement was performed at N = 3, and an average value was measured as the breaking strength.
The measurement results of the breaking strength are shown in Table 1.

[Table 1]

| | Aluminum foil | Electrolytic copper foil | SUS foil A | SUS foil B | Ni-plated steel foil | SUS foil C |
|---|---|---|---|---|---|---|
| Breaking strength ($N/mm^2$) | 180 | 300 | 400 | 600 | 800 | 1000 |

Through-holes were formed in an aluminum foil, an electrolytic copper foil, and a Ni-plated steel foil by the following method. Moreover, a plurality of perforated metal foils having different average opening ratios were produced for each metal foil by changing the time for immersion in the etchant. Specifically, perforated metal foils having average opening ratios of 0.01%, 0.3%, 0.5%, 1%, 2%, 3.4%, 9.1%, and 11.2%, respectively, were produced.

<(a-1) Resin Layer Forming Step>

A resin layer forming composition 1 prepared to have the following composition was applied to one surface of a metal foil and dried to form a resin layer A1 having a thickness of about 1 μm.

Moreover, a composition prepared in the same ratio as the following resin layer forming composition 1, except that no copper particles were contained, was applied to the other surface of the metal foil and dried to form a protective layer B1 having a thickness of about 1 μm.

| Resin Layer Forming Composition 1 | |
|---|---|
| • m,p-Cresol novolak<br>(m/p ratio=6/4, weight-average molecular weight: 4,100) | 1.2 g |
| • HXR-Cu (copper particles, average particle diameter: 5.0 μm,<br>manufactured by Nippon Atomized Metal Powders Corporation) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

<(b-1) Through-Hole Forming Step>

Next, the metal foil having the resin layer A1 and the protective layer B1 was immersed in an etchant [concentration of iron(III) chloride: 30 mass%, concentration of hydrochloric acid: 3.65 mass%] kept at 50°C, and then washed with water by spraying and dried to form through-holes.

<(c) Resin Layer Removing Step>

Next, the copper foil after the formation of the through-holes was immersed for 120 seconds in an alkaline aqueous solution (concentration of sodium hydroxide: 0.4 mass%) having a liquid temperature of 50°C to dissolve and remove the resin layer A1 and the protective layer B1.

Then, the copper foil was washed with water by spraying and dried to produce a perforated metal foil having through-holes.

Through-holes were formed in SUS foils A to C by the following method. Moreover, a plurality of perforated metal foils having different average opening ratios were produced for each metal foil by changing the time for immersion in the etchant.

The metal foil was degreased and then immersed in an etchant [concentration of iron(III) chloride: 30 mass%, concentration of hydrochloric acid: 3.65 mass%] kept at 35°C to proceed local dissolution starting from an intermetallic compound (precipitate or crystallized material) in the metal foil, and thus through-holes were formed. Since a formation state of holes is different depending on materials, the immersion time of each material was adjusted so that a plurality of perforated metal foils having different average opening ratios were produced for each metal foil.

For each of the produced perforated metal foils, a number density of the through-holes was measured as follows.

A parallel light optical unit was installed on one surface side of the perforated metal foil, parallel light was transmitted, and the surface of the perforated metal foil was imaged using an optical microscope at a magnification of 100 times from the other surface of the perforated metal foil to acquire a photograph. In visual fields of 1 mm×1 mm (at five places) in a 10 cm×10 cm range in the obtained photograph, a number density (number of through-holes/geometric area) was calculated from the number of the through-holes projected with the transmitted parallel light and the area of the visual field (geometric area), and the average value of the number densities in the visual fields (at five places) was calculated as the number density.

In a case where the average opening ratios were the same, the measured number densities were almost the same (within a range of ±5% with respect to the average value) regardless of the type of the metal foil. Therefore, average values of the number densities of through-holes in all the perforated metal foils were determined for each of the average opening ratios.

Table 2 shows a relationship between the average opening ratio and the number density (average value).

Moreover, the average opening diameter was about 10 μm in all cases.

[Table 2]

| | | | | | | | | |
|---|---|---|---|---|---|---|---|---|
| Average opening ratio (%) | 0.01 | 0.3 | 0.5 | 1 | 2 | 3.4 | 9.1 | 11.2 |

(continued)

| Number density (holes/ mm$^2$) | 1.3 | 33 | 52 | 86 | 105 | 140 | 187 | 230 |
|---|---|---|---|---|---|---|---|---|

Symbols are given to the respective produced perforated metal foils as shown in Table 3 below. In Table 3, foils C3 to C7, foils SA3 to SA7, foils SB3 to SB7, foils N3 to N7, and foils SC3 to SC7 correspond to the Examples of the present invention.

[Table 3]

| Average opening ratio (%) | Aluminum foil | Electrolytic copper foil | SUS foil A | SUS foil B | Ni-plated steel foil | SUS foil C |
|---|---|---|---|---|---|---|
| 0.01 | Foil A1 | Foil C1 | Foil SA 1 | Foil SB1 | Foil N1 | Foil SC1 |
| 0.3 | Foil A2 | Foil C2 | Foil SA2 | Foil SB2 | Foil N2 | Foil SC2 |
| 0.5 | Foil A3 | Foil C3 | Foil SA3 | Foil SB3 | Foil N3 | Foil SC3 |
| 1 | Foil A4 | Foil C4 | Foil SA4 | Foil SB4 | Foil N4 | Foil SC4 |
| 2 | Foil A5 | Foil C5 | Foil SA5 | Foil SB5 | Foil N5 | Foil SC5 |
| 3.4 | Foil A6 | Foil C6 | Foil SA6 | Foil SB6 | Foil N6 | Foil SC6 |
| 9.1 | Foil A7 | Foil C7 | Foil SA7 | Foil SB7 | Foil N7 | Foil SC7 |
| 11.2 | Foil A8 | Foil C8 | Foil SA8 | Foil SB8 | Foil N8 | Foil SC8 |

A negative electrode active material including various electrode materials for a negative electrode was applied to the perforated metal foils having two conditions of average opening ratios of 2% and 3.4% among these perforated metal foils to produce a negative electrode. Two types of electrode materials of SiO and Si were used for the electrode material for a negative electrode.

As the negative electrode active material, a slurry was prepared by adding 70 parts by mass of ground SiO (or Si) and 30 parts by mass of a binder (BM-400B manufactured by Zeon Corporation) to water and by performing dispersion.

Next, the prepared slurry was applied on both sides of the perforated metal foil by a die coater so that a total thickness was 200 μm, and dried at 120°C for 30 minutes, and an active material layer was formed on the surface of the perforated metal foil to produce a negative electrode.

Moreover, as a positive electrode, a positive electrode obtained by using an aluminum foil having the same average opening ratio and applying a positive electrode active material containing $LiCoO_2$ as a positive electrode material was used.

As the positive electrode active material, a slurry was prepared by adding 90 parts by mass of $LiCoO_2$ powder and 10 parts by mass of a binder (KF POLYMER manufactured by KUREHA CORPORATION) to water and by performing dispersion.

Next, the prepared slurry was applied on both sides of the perforated metal foil by a die coater so that a total thickness was 200 μm, and dried at 120°C for 30 minutes, and an active material layer was formed on the surface of the perforated metal foil to produce a positive electrode.

A coin-type battery was produced using the negative electrode and the positive electrode produced above.

Specifically, the coin-type battery was a CR2032 type (diameter of 20 mm, thickness of 3.2 mm), and was produced using the positive electrode and the negative electrode produced above.

A discharge-charge cycle test was performed using the produced coin-type battery.

The discharge-charge cycle test was performed at 25°C under a discharge-charge condition of 0.5 C for 20 cycles, a ratio of a capacity after the test to a capacity in the initial state was determined, an evaluation was performed according to the following criteria.

The capacity was measured using TOSCAT-3000 manufactured by Toyo System Co., Ltd. A and B evaluations were acceptable.

A: Capacity of 80% or more

B: Capacity of 70% or more and less than 80%

C: Capacity of less than 70%

In addition, after the discharge-charge cycle test, the coin-type battery was disassembled, the appearance of the negative electrode was observed, the degree of peeling or cracking was visually checked, and an evaluation was performed according to the following criteria. A and B evaluations were acceptable.

A: there was no abnormality

B: Cracks occurred only on the surface layer

C: Cracks reaching the collector occurred

D: Peeling of the electrode material occurred

The configurations of the Examples and Comparative Examples, and the evaluation results are shown in Table 4.

[Table 4]

| | Negative electrode | | Positive electrode | | Evaluation | |
|---|---|---|---|---|---|---|
| | Electrode material | Collector | Electrode material | Collector | Cycle test | Appearance of electrode |
| Example 1 | SiO | Foil SC5 | $LiCoO_2$ | Foil A5 | A | A |
| Example 2 | SiO | Foil SC6 | $LiCoO_2$ | Foil A6 | A | A |
| Example 3 | SiO | Foil N5 | $LiCoO_2$ | Foil A5 | A | A |
| Example 4 | SiO | Foil N6 | $LiCoO_2$ | Foil A6 | A | A |
| Example 5 | SiO | Foil SB5 | $LiCoO_2$ | Foil A5 | A | A |
| Example 6 | Si | Foil SC5 | $LiCoO_2$ | Foil A5 | A | A |
| Example 7 | Si | Foil SC6 | $LiCoO_2$ | Foil A6 | A | A |
| Example 8 | Si | Foil N5 | $LiCoO_2$ | Foil A5 | A | A |
| Example 9 | Si | Foil N6 | $LiCoO_2$ | Foil A6 | B | B |
| Example 10 | Si | Foil SB5 | $LiCoO_2$ | Foil A5 | B | B |

Here, after (c) resin layer removing step was performed on the foil C6 of the electrolytic copper foil, a perforated metal foil subjected to the following (d) residue removing step was produced (foil C9).

<(d) Residue Removing Step>

The perforated metal foil was immersed in 1% hydrochloric acid for 10 seconds, then washed with water by spraying, and dried to produce a perforated metal foil having through-holes. Halogen was detected by an XRF analysis before and after the residue removing step, and the reaction residue was measured. As a result, an amount of chlorine atoms detected before the residue removing step was 0.44 mass%, while the amount thereof after the residue removing step was 0.0095 mass%.

<Corrosion Test>

The foil C6 and the foil C9 were left in an atmosphere of a temperature of 60°C and a relative humidity of 70% for one week, and then the presence or absence of corrosion was visually checked.

As a result, corrosion was observed on the surface of the foil C6. On the other hand, corrosion did not occur on the surface of the foil C9.

Next, a case where the average opening ratios were the same and the number densities of the through-holes were different was examined.

Through-holes were formed in the SUS foil C by the following method, and perforated metal foils having through-holes having the average opening ratio and the number density shown in Table 5 were produced.

A resist (PMER manufactured by Tokyo Ohka Kogyo Co., Ltd.) was applied to the metal foil and dried at 90°C for 20 minutes. Next, a positive film provided with a predetermined pattern was closely attached to the resist film and UV exposure was performed to form a latent image on the resist film. In the exposure pattern, circles which had an

opening diameter of about 100 μm and which were unexposed portions were arranged at regular intervals. Subsequently, the unexposed portion was removed by developing with a developer for PMER manufactured by Tokyo Ohka Kogyo Co., Ltd. under a condition of 30°C and 30 seconds, and thus a resist film having a plurality of circular portions without the resist was obtained. A resist film was also formed on a back surface side, and the entire surface was exposed.

Subsequently, etching was performed to dissolve a metal foil of a portion without the resist, thereby forming through-holes.

Average opening diameters and number densities of the produced through-holes of the perforated metal foils are shown in Table 5. In addition, symbols were given to each perforated metal foil as shown in Table 5. All of the perforated metal foils shown in Table 5 correspond to Comparative Examples of the present invention.

The average opening diameter was about 100 μm in all cases.

[Table 5]

| Average opening ratio (%) | 0.01 | 0.3 | 0.5 | 1 | 2 | 3.4 | 11.2 |
|---|---|---|---|---|---|---|---|
| Number density (holes/ $mm^2$) | 0.01 | 0.3 | 0.5 | 1.2 | 2.5 | 4.2 | 14 |
| Symbol | Foil SCb1 | Foil SCb2 | Foil SCb3 | Foil SCb4 | Foil SCb5 | Foil SCb6 | Foil SCb8 |

Through-holes were formed in the SUS foil C by the following method, and perforated metal foils having through-holes having the average opening ratio and the number density shown in Table 6 were produced.

A plurality of through-holes were formed in the metal foil by a mechanical drilling method.

In the mechanical drilling method, a large number of pin-shaped die sets were used. Since a hole formed by this method is determined by a diameter of a pin, a through-hole having a diameter of 300 μm was formed in a range in which stable drilling is possible without breakage of the pin during the drilling.

The average opening ratio was adjusted by changing the number density of the through-holes.

Average opening diameters and number densities of the produced through-holes of the perforated metal foils are shown in Table 6. In addition, symbols were given to each perforated metal foil as shown in Table 6. All of the perforated metal foils shown in Table 6 correspond to Comparative Examples of the present invention.

[Table 6]

| Average opening ratio (%) | 0.01 | 0.3 | 0.5 | 1 | 2 | 3.4 | 11.2 |
|---|---|---|---|---|---|---|---|
| Number density (holes/ $mm^2$) | 0.001 | 0.04 | 0.05 | 0.14 | 0.3 | 0.5 | 1.6 |
| Symbol | Foil SCc1 | Foil SCc2 | Foil SCc3 | Foil SCc4 | Foil SCc5 | Foil SCc6 | Foil SCc8 |

A negative electrode active material containing an electrode material for a negative electrode was applied to each of these perforated metal foils, and the negative electrode was produced.

As the negative electrode active material, a slurry was prepared by adding 90 parts by mass of graphite powder and 10 parts by mass of a binder (BM-400B manufactured by Zeon Corporation) to water and by performing dispersion.

Next, the prepared slurry was applied on both sides of the perforated metal foil by a die coater so that a total thickness was 200 μm, and dried at 120°C for 30 minutes, and an active material layer was formed on the surface of the perforated metal foil to produce a negative electrode.

As a positive electrode, the positive electrode used in Example 1 was used.

A cell was produced using the negative electrode and positive electrode produced above.

Specifically, a positive electrode, a separator, a negative electrode, a separator, a positive electrode, a separator, a negative electrode, and a lithium foil were stacked in this order and immersed in an electrolytic solution to produce the cell.

HIPORE manufactured by Asahi Kasei Corporation was used as the separator.

1 mol of $LiPF_6$/EC was used as the electrolytic solution.

The cell was a coin cell, and all effective portions of an electrode had a circular shape with a diameter of 10 mm.

The pre-doping characteristics were evaluated using the produced cell.

A lithium foil and a negative electrode were short-circuited to start pre-doping. After 72 hours, the cell was disassembled, the negative electrode on a side which was not adjacent to the lithium foil was visually observed, and the state of pre-doping was evaluated based on the following criteria.

A: Lithium is adsorbed on the entire surface of the negative electrode
B: Adsorption of lithium is uneven

The configurations of the Examples and Comparative Examples, and the evaluation results are shown in Table 7.

[Table 7]

| | Negative electrode | | Positive electrode | | Evaluation |
|---|---|---|---|---|---|
| | Electrode material | Collector | Electrode material | Collector | Pre-doping characteristic |
| Example 11 | Graphite | Foil N3 | $LiCoO_2$ | Foil A5 | A |
| Example 12 | Graphite | Foil N4 | $LiCoO_2$ | Foil A5 | A |
| Example 13 | Graphite | Foil N5 | $LiCoO_2$ | Foil A5 | A |
| Example 14 | Graphite | Foil N6 | $LiCoO_2$ | Foil A5 | A |
| Example 15 | Graphite | Foil N7 | $LiCoO_2$ | Foil A5 | A |
| Example 16 | Graphite | Foil SC3 | $LiCoO_2$ | Foil A5 | A |
| Example 17 | Graphite | Foil SC4 | $LiCoO_2$ | Foil A5 | A |
| Example 18 | Graphite | Foil SC5 | $LiCoO_2$ | Foil A5 | A |
| Example 19 | Graphite | Foil SC6 | $LiCoO_2$ | Foil A5 | A |
| Example 20 | Graphite | Foil SC7 | $LiCoO_2$ | Foil A5 | A |
| Comparative Example 1 | Graphite | Foil N1 | $LiCoO_2$ | Foil A5 | B |
| Comparative Example 2 | Graphite | Foil N2 | $LiCoO_2$ | Foil A5 | B |
| Comparative Example 3 | Graphite | Foil SC1 | $LiCoO_2$ | Foil A5 | B |
| Comparative Example 4 | Graphite | Foil SC2 | $LiCoO_2$ | Foil A5 | B |
| Comparative Example 5 | Graphite | Foil SCb5 | $LiCoO_2$ | Foil A5 | B |
| Comparative Example 6 | Graphite | Foil SCb6 | $LiCoO_2$ | Foil A5 | B |
| Comparative Example 7 | Graphite | Foil SCb8 | $LiCoO_2$ | Foil A5 | B |
| Comparative Example 8 | Graphite | Foil SCc5 | $LiCoO_2$ | Foil A5 | B |
| Comparative Example 9 | Graphite | Foil SCc6 | $LiCoO_2$ | Foil A5 | B |
| Comparative Example 10 | Graphite | Foil SCc8 | $LiCoO_2$ | Foil A5 | B |

As can be seen from Table 4 and Table 7, it was found that in a case where the perforated metal foil according to the embodiment of the present invention was used as a collector, cycle characteristics during charging and discharging were high, and pre-doping characteristics was high.

On the other hand, it was found that in case of a perforated metal foil in which the average opening diameter by the through-holes was large and the number density of the through-holes was small, pre-doping could not be performed uniformly. In addition, it was found that in a case where the average opening ratio was too small, pre-doping could not be performed uniformly.

Next, Examples and Comparative Example of a secondary battery in which a perforated metal foil having an average opening ratio of 9.1% was used among the perforated metal foils and sulfur was contained in a positive electrode material will be described.

A positive electrode using a composite material of sulfur and carbon as a positive electrode active material was produced. As the collector, the perforated metal foils of the foil SA7, the foil SC7, and the foil A7 described in Table 3 were used. An electrode using the foil SA7 or the foil SC7 made of SUS is Example of the present application, and an electrode using the foil A7 made of aluminum is Comparative Example of the present application.

A negative electrode using graphite was used as the negative electrode serving as a counter electrode. A copper foil C7 having the same opening ratio was used as a collector for a negative electrode.

As the positive electrode active material, a sulfur-carbon composite material obtained by mixing sulfur and carbon fine particles at a ratio of 1:1 and by performing firing was used. The composite material was ground, acetylene black serving as a conductive auxiliary agent and carboxymethylcellulose (CMC) were added to the ground composite material, and thus a slurry for a positive electrode was produced. The ratio of the sulfur-carbon composite material, the acetylene black, and the CMC was 90:5:5.

Next, the prepared slurry was applied on both sides of the perforated metal foil by a die coater so that a total thickness was 200 μm, and dried at 120°C for 30 minutes, and an active material layer was formed on the surface of the perforated metal foil to produce a positive electrode.

Moreover, as a negative electrode, a negative electrode obtained by using a copper foil having the same average opening ratio and applying a negative electrode active material containing carbon graphite as a negative electrode material thereto to form an active material layer was used.

A coin-type battery was produced using the positive electrode and the negative electrode produced above.

Specifically, the coin-type battery was a CR2032 type, and was produced using the positive electrode and the negative electrode produced above.

A discharge-charge cycle test was performed using the produced coin-type battery.

The discharge-charge cycle test was performed at 25°C under a discharge-charge condition of 0.5 C for 20 cycles, a ratio of a capacity after the test to a capacity in the initial state was determined, an evaluation was performed according to the following criteria.

The capacity was measured using TOSCAT-3000 manufactured by Toyo System Co., Ltd. A and B evaluations were acceptable.

A: Capacity of 80% or more
B: Capacity of 70% or more and less than 80%
C: Capacity of less than 70%

In addition, after the discharge-charge cycle test, the coin-type battery was disassembled, the appearance of the positive electrode was observed, the degree of peeling or cracking was visually checked, and an evaluation was performed according to the following criteria. A and B evaluations were acceptable.

A: there was no abnormality

B: Cracks occurred only on the surface layer

C: Cracks reaching the collector occurred

D: Peeling of the electrode material occurred

The configurations of the Examples and Comparative Examples, and the evaluation results are shown in Table 8. In an item of the electrode material of the positive electrode in Table 8, an electrode material containing a sulfur-carbon composite material is denoted as "S/C composite material".

[Table 8]

| | Positive electrode | | Negative electrode | | Evaluation | |
|---|---|---|---|---|---|---|
| | Electrode material | Collector | Electrode material | Collector | Cycle test | Appearance of electrode |
| Example 21 | S/C composite material | Foil SA7 | Graphite | Foil C7 | A | B |
| Example 22 | S/C composite material | Foil SC7 | Graphite | Foil C7 | A | A |
| Comparative Example 11 | S/C composite material | Foil A7 | Graphite | Foil C7 | C | D |

As can be seen from Table 8, it was found that even in a case where the perforated metal foil according to the embodiment of the present invention was used as a collector for a positive electrode, cycle characteristics during charging and discharging were high, and damage of the collector could be suppressed.

The effects of the present invention are obvious from the above results.

Explanation of References

1: metal foil

2: metal particles

3: resin layer

4: protective layer

5, 6: through-holes

10: perforated metal foil

## Claims

**1.** A perforated metal foil, which has a plurality of through-holes in a thickness direction of a metal foil,

wherein an average opening ratio by the through-holes is 0.5% to 10%, and a number density of the through-holes is 50 to 200 holes/$mm^2$, and
the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a foil formed by laminating a foil selected from the group and a metal of a different type from the selected foil.

**2.** The perforated metal foil according to claim 1,
wherein the metal foil is a stainless steel foil or a nickel-plated steel foil.

**3.** The perforated metal foil according to claim 1 or 2,
wherein breaking strength of the metal foil in a state where the through-holes are not formed is 340 N/$mm^2$ or more.

**4.** The perforated metal foil according to any one of claims 1 to 3,
wherein the average opening ratio by the through-holes is 1% to 10%.

**5.** The perforated metal foil according to any one of claims 1 to 4,
wherein the number density of the through-holes is 80 to 200 holes/$mm^2$.

**6.** The perforated metal foil according to claim 1 or 2,
wherein the metal foil is a copper foil.

**7.** The perforated metal foil according to claim 6,
wherein an amount of halogen detected in the copper foil by an XRF analysis is 0.4 mass% or less.

**8.** A negative electrode for a secondary battery, comprising:

a negative electrode collector formed of the perforated metal foil according to any one of claims 1 to 7; and
an active material layer including a negative electrode active material, which is formed on a surface of the negative electrode collector,
wherein the negative electrode active material is at least one of silicon, tin, or oxides thereof.

**9.** A positive electrode for a secondary battery, comprising:

a positive electrode collector formed of the perforated metal foil according to any one of claims 1 to 7; and
an active material layer including a positive electrode active material, which is formed on a surface of the positive electrode collector,
wherein the positive electrode active material is at least one of sulfur or a compound containing sulfur.

**10.** A method for manufacturing the perforated metal foil according to any one of claims 1 to 7, comprising:

a through-hole forming step of forming through-holes in the metal foil,
wherein through-holes having an average opening ratio of 0.5% to 10% and a number density of 50 to 200 holes/$mm^2$ are formed by the through-hole forming step.

**11.** The method for manufacturing the perforated metal foil according to claim 10,

wherein the metal foil is a copper foil, and
the method further comprises a residue removing step of performing washing with at least one selected from the group consisting of hydrochloric acid, aqueous ammonia, sodium thiosulfate, and ethanol after the through-holes are formed.

FIG. 1

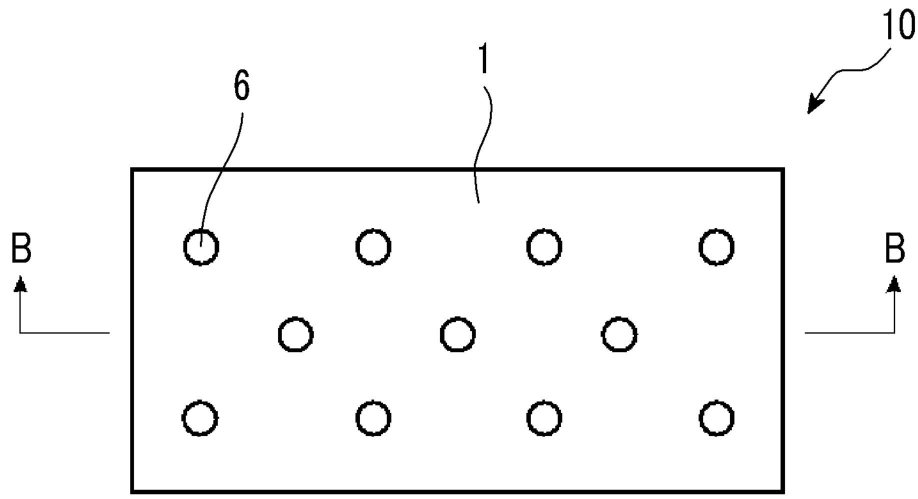


FIG. 2

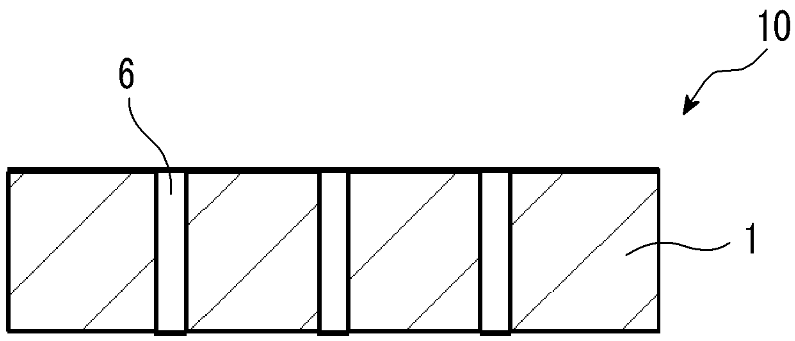


FIG. 3

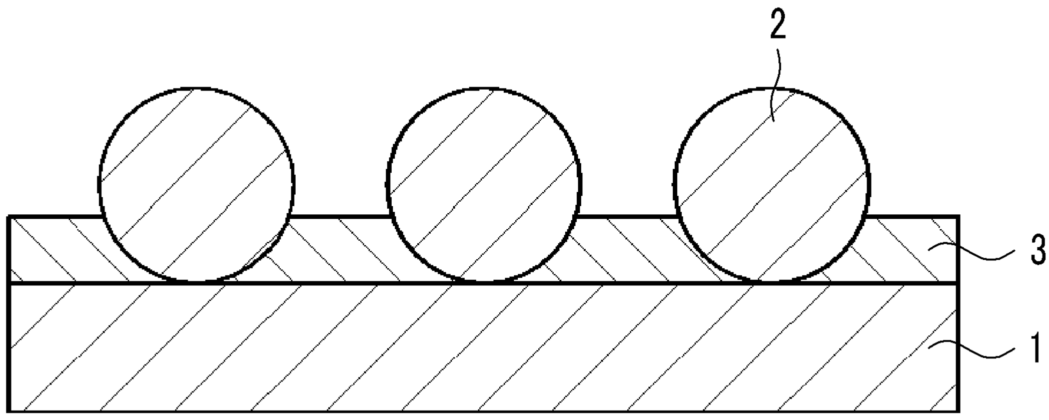

FIG. 4

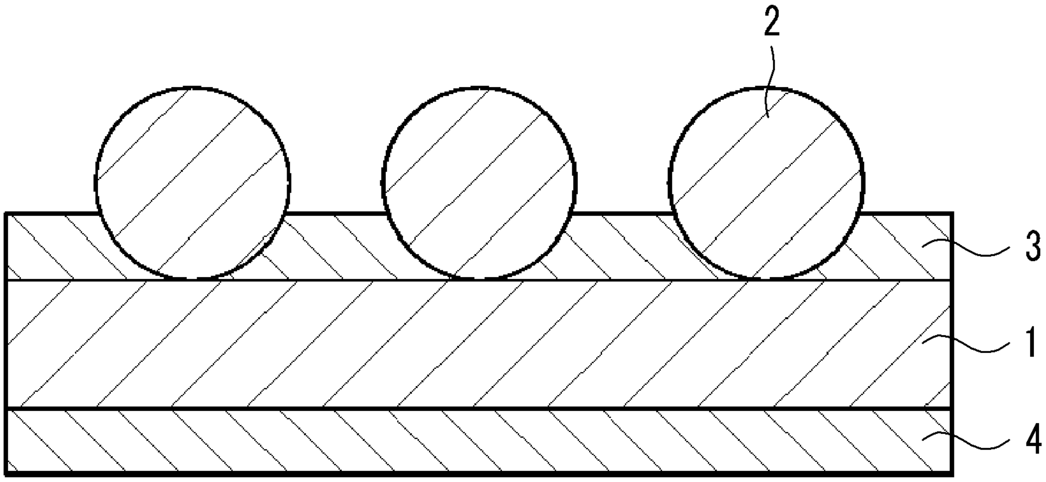


FIG. 5

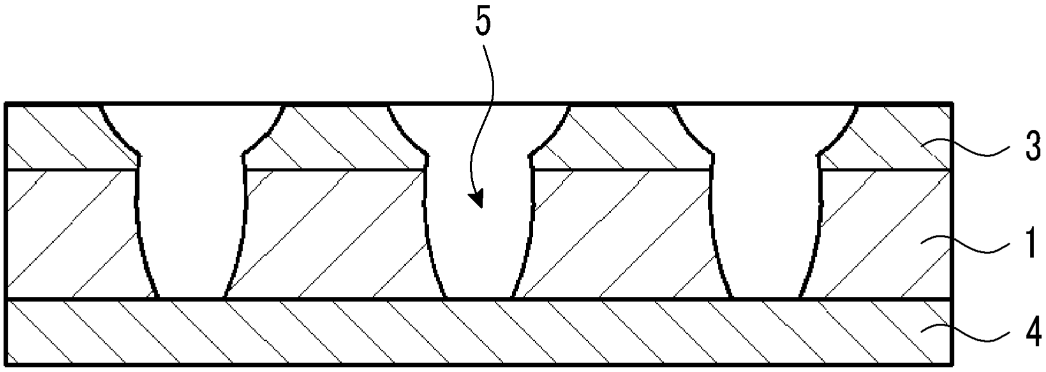


FIG. 6

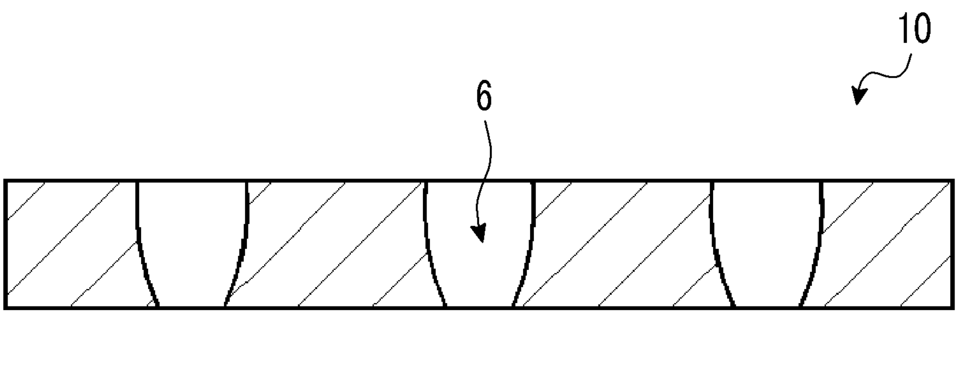

## INTERNATIONAL SEARCH REPORT

International application No. PCT/JP2018/016425

A. CLASSIFICATION OF SUBJECT MATTER
Int.Cl. H01M4/70(2006.01)i, H01G11/68(2013.01)i, H01G11/70(2013.01)i, H01M4/13(2010.01)i, H01M4/134(2010.01)i, H01M4/66(2006.01)i, H01G11/06(2013.01)n
According to International Patent Classification (IPC) or to both national classification and IPC

B. FIELDS SEARCHED
Minimum documentation searched (classification system followed by classification symbols)
Int.Cl. H01M4/70, H01G11/68, H01G11/70, H01M4/13, H01M4/134, H01M4/66, H01G11/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2012-138408 A (NEC TOKIN CORP.) 19 July 2012, claims, paragraphs [0034], [0065]-[0077], [0082]-[0085], table 1 (Family: none) | 1-4, 6, 10<br>1-3, 7<br>5, 11 |
| X<br>Y | JP 9-22699 A (TOSHIBA BATTERY CO., LTD.) 21 January 1997, claim 4, paragraph [0059] (Family: none) | 1, 4-6, 10<br>7 |
| X<br>Y | JP 2006-228512 A (MITSUI MINING & SMELTING CO., LTD.) 31 August 2006, claims, paragraphs [0070], [0075], [0076], table 1 (Family: none) | 1, 4-6, 8, 10<br>1-3, 7 |
| X<br>Y | JP 2012-4491 A (NEC TOKIN CORP.) 05 January 2012, claims, paragraphs [0044], [0045], [0048], [0049], [0058]-[0060] (Family: none) | 1-6, 10<br>1-3, 7-9, 11 |
| Y | JP 2003-263979 A (MATSUSHITA ELECTRIC INDUSTRIAL CO., LTD.) 19 September 2003, paragraph [0027] (Family: none) | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 July 2018 (12.07.2018) | 24 July 2018 (24.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/016425

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2014/119582 A1 (FURUKAWA ELECTRIC CO., LTD.) 07 August 2014, claims, paragraph [0029] & CN 104812943 A & KR 10-2015-0114459 A & TW 201439384 A | 7 |
| Y | WO 2014/178327 A1 (FURUKAWA ELECTRIC CO., LTD.) 06 November 2014, claims, paragraph [0021] & CN 104508878 A & TW 201510277 A & KR 10-2015-0086222 A | 7 |
| Y | WO 2016/159058 A1 (HITACHI CHEMICAL CO., LTD.) 06 October 2016, paragraph [0015] & US 2018/0083288 A1, paragraph [0016] & EP 3279994 A1 & CN 107431236 A & KR 10-2017-0131649 A | 8, 9 |
| Y | WO 2012/049967 A1 (KUREHA CORPORATION) 19 April 2012, paragraphs [0172], [0173] & CN 103155247 A & KR 10-2013-0054467 A | 11 |
| P, X | JP 2018-53276 A (FUJIFILM CORP.) 05 April 2018, paragraphs [0018], [0095]-[0102], [0107] (Family: none) | 1-6, 10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013077734 A
- JP 62251740 A
- JP S62251740 A
- JP 3208514 A
- JP H3208514 A
- JP 59121044 A
- JP S59121044 A
- JP 4013149 A
- JP H4013149 A
- JP 2012216513 A